# EUROPÄISCHE PATENTANMELDUNG

(11) **EP 1 616 626 A1**
(43) Veröffentlichungstag der Anmeldung: **18.01.2006**
(21) Anmeldenummer: 05405385.5
(22) Anmeldetag: 16.06.2005
(51) Int. Cl.: B03B 9/06, B02C 18/08, B02C 13/14

(54) **Verfahren zum mechanischen Zerkleinern und Nutzen eines heterogenen Einsatzguts**

(30) Priorität: 14.07.2004 EP 04405448
(71) Anmelder: CTU - Conzepte Technik Umwelt AG, 8400 Winterthur (CH)
(72) Erfinder: Moergeli, Rudolf, 8708 Männedorf (CH); Isch, Daniel, 8412 Aesch bei Neftenbach (CH)
(74) Vertreter: Sulzer Management AG

(57) **Zusammenfassung**

Das Verfahren ist zum mechanischen Zerkleinern und Nutzen eines heterogenen Einsatzguts anwendbar. Das Einsatzgut umfasst Metalle und verbrennbare sowie nichtbrennbare nichtmetallische Komponenten. Es kann als Reststoffprodukt bei einem Recyclingverfahren, insbesondere bei einem Schreddern von Autowracks anfallen. Das Einsatzgut durchläuft ein netzwerkartiges System von Systemkomponenten, nämlich Transport-, Separierungs- sowie Klassierungsmitteln und als Zerkleinerungsvorrichtungen verwendeten Maschinen. Dabei wird es in diverse Ströme von metallischen sowie nichtmetallischen Fraktionen und von schwer zerkleinerbaren Störstoffen verzweigt. Störstoffe mit Übergrössen werden bereits zu Beginn des Verfahrens eliminiert und die weiteren Störstoffe jeweils bei deren Aufgreifen vor Eintritt in eine zu schützende Systemkomponente, insbesondere Maschine, aus dem Verfahren entfernt. Die Metalle werden als rezyklierbare Endprodukte ausgesondert. Die nichtmetallischen Fraktionen, die insbesondere aus drei Fraktionen - bestehend jeweils hauptsächlich aus Kunststoffpartikeln, faserigen Stoffen bzw. anorganischen Partikeln - gebildet sind, werden als Zwischenprodukte in Bezug auf weitere Teilverfahren gesondert behandelt. Die behandelten Zwischenprodukte werden in mindestens einem weiteren Teilverfahren genutzt. Beispielsweise werden sie in einem kontinuierlich betreibbaren Ofen verbrannt.

## Beschreibung

Die Erfindung betrifft ein Verfahren zum mechanischen Zerkleinern und Nutzen eines heterogenen Einsatzguts sowie eine Anlage zum Durchführen des Verfahrens. Das Einsatzgut umfasst dabei Metalle und verbrennbare sowie nichtbrennbare nichtmetallische Komponenten. Es fällt beispielsweise als Produkt bei einem Recyclingprozess, insbesondere bei einem Schreddern von Autowracks an. Ein solches Produkt ist ein verwertbarer Reststoff in Form eines heterogenen Gemisches, das Fasern, Schaumstoffe, Kunststoffe, Holz, Papier, Drähte, elektrische Kabel, weitere Metalle und/oder weitere anorganische, insbesondere mineralische Stoffe umfasst.

Bekannte Verfahren zum mechanischen Zerkleinern sind für Sparten der Aufbereitungstechnik entwickelt worden (z.B. Verwertung von Baustoffen, die beim Abreissen von Gebäuden anfallen), bei denen die mit einem heterogenen Einsatzgut auftretenden Probleme auch nach Anpassungen nur ungenügend gelöst werden können. Bei solchen modifizierten Verfahren werden Zerkleinerungsprinzipien angewendet, die hinsichtlich den besonderen Aufgaben mit der Zerkleinerung eines heterogenen Einsatzguts zu wenig geeignet sind; es lassen sich nur einzelne Fraktionen des vielfältigen Gemisches effizient zerkleinern. Sprödes Material, beispielsweise Glas, lässt sich gut zerkleinern, während zähe Stoffe, beispielsweise elastische Polymere, kaum oder nicht zerkleinert werden können. Das mittels bekannten Verfahren behandelte Einsatzgut kann nur schwer beispielsweise als Brennstoff weiter verwertet werden.

Aufgabe der Erfindung ist es, ein Verfahren zu schaffen, mit dem ein heterogenes Einsatzgut zwecks Nutzung beispielsweise als Brennstoff in effizienter Weise mechanisch zerkleinert werden kann. Diese Aufgabe wird durch das im Anspruch 1 definierte Verfahren gelöst.

Das Verfahren ist zum mechanischen Zerkleinern und Nutzen eines heterogenen Einsatzguts vorgesehen. Das Einsatzgut umfasst Metalle und verbrennbare sowie nichtbrennbare nichtmetallische Komponenten. Es kann als Reststoffprodukt bei einem Recyclingverfahren, insbesondere bei einem Schreddern von Autowracks anfallen. Das Einsatzgut durchläuft ein netzwerkartiges System von Systemkomponenten, nämlich Transport-, Separierungs- sowie Klassierungsmitteln und als Zerkleinerungsvorrichtungen verwendeten Maschinen. Dabei wird es in diverse Ströme von metallischen sowie nichtmetallischen Fraktionen und von schwer zerkleinerbaren Störstoffen verzweigt. Störstoffe mit Übergrössen werden bereits zu Beginn des Verfahrens eliminiert und die weiteren Störstoffe jeweils bei deren Aufgreifen vor Eintritt in eine zu schützende Systemkomponente, insbesondere Maschine, aus dem Verfahren entfernt. Die Metalle werden als rezyklierbare Endprodukte ausgesondert. Die nichtmetallischen Fraktionen, die insbesondere aus drei Fraktionen - bestehend jeweils hauptsächlich aus Kunststoffpartikeln, faserigen Stoffen bzw. anorganischen Partikeln - gebildet sind, werden als Zwischenprodukte in Bezug auf weitere Teilverfahren gesondert behandelt. Die behandelten Zwischenprodukte werden in mindestens einem weiteren Teilverfahren genutzt. Beispielsweise werden sie in einem kontinuierlich betreibbaren Ofen verbrannt.

Die abhängigen Ansprüche 2 bis 6 betreffen vorteilhafte Ausführungsformen des erfindungsgemässen Verfahrens. Anlagen zum Durchführen des Verfahrens sind Gegenstand der Ansprüche 7 bis 10.

Bei diesem Vorgehen, einen heterogenen Reststoff mit der erfindungsgemässen Anlage zu behandeln, stehen nicht die Verwendung einer besonderen Zerkleinerungsmaschine im Zentrum sondern das zu erzeugende Endprodukt. Die Komponenten des Reststoffs lassen sich dank einer Gliederung der Anlage, die sich aus netzartig zusammenhängenden Systemkomponenten zusammensetzt, jeweils gezielt auf vorgegebene Stück- oder Partikelgrössen aufbereiten. Die Partikelgrössen des Endproduktes werden in der Regel vorgegeben, um eine Auslegung der Systemkomponenten durchführen zu können. Es ist aber mit dem erfindungsgemässen Vorgehen leicht möglich, die Anlage nach deren Erstellung auf einfache Weise geänderten Erfordernissen anzupassen. Die zu erzielenden Partikelgrössen können bei Bedarf hinsichtlich der vorgesehenen Nutzung, also einer besonderen Verwertung oder Rezyklierung, im Wesentlichen ohne Entfernen, Hinzufügen oder Ersetzen von Systemkomponenten verändert werden.

Eine Anlage zum Durchführen des erfindungsgemässen Verfahrens umfasst folgende Systemkomponenten: Klassierungs- und Separierungsmittel zum Bilden von Fraktionen oder Eliminieren von Störstoffen; Transportmittel zum kontinuierlichen bzw. chargenweisen Fördern von nichtmetallischen Fraktionen bzw. Metallen und Störstoffen, die in Sammelbehältern zwischengelagert werden; und mindestens zwei unterschiedliche Zerkleinerungsvorrichtungen zum Zerschlagen bzw. Zerschneiden von Komponenten des Einsatzguts, wobei Prallreaktoren, Granulatoren und Schneidmühlen zu partiellen Fragmentierungen verwendet werden können.

Im Zusammenspiel der Klassierungsmittel sind die erforderlichen Stück- oder Partikelgrössen kleiner als vorgebbare Maximalwerte erzeugbar. Die Klassierungsmittel sind zumindest teilweise Einrichtungen, die mit Sieben, Spannwellensieben, Siebstegen, Lochblechen oder ähnlichem solcherart ausgestattet sind, dass durch Verändern der Klassierungsmittel ein nachträgliches Anpassen des Verfahrens möglich ist. Dabei können diese Einrichtungen beispielsweise in einem Siebturm angeordnet sein. Als Separierungsmittel kommen Rollenroste, Sichter, Lufttrenntische, Magnettrommeln, Überbandmagnete und/oder Nichteisenmetall-Scheider zum Einsatz, wobei diese Systemkomponenten jeweils auch als eine einzelne Komponente eingesetzt werden können.

Als Transportmittel kommen Greiferkranen, Rollenroste, Förderschnecken, Förderbänder und/oder Elevatoren zum Einsatz. Dabei können diese Systemkomponenten auch jeweils als eine einzelne Komponente auftreten. Behälter wie Mulden, Bunker und/oder Silos zu Lagerungszwecken ergänzen die Transportmittel.

Eine bevorzugte Anwendung des erfindungsgemässen Verfahrens ist die Nutzung von sogenanntem "Resh". (Dies ist eine in der Schweiz verwendete Kurzbezeichnung für einen besonderen Reststoff, die sich aus den Worten 'Reststoff und 'Shredder' ableitet. Weitere Bezeichnungen sind "Schredder-Leichtfraktion", kurz SLF, in Deutschland oder Österreich und "Fluff" in englischsprachigen Ländern.) Bei einem Resh oder spezieller einem "Rohresh" handelt es sich um eine Leichtfraktion, die beim Schreddern von Autowracks anfällt. Ziel der mechanischen Aufbereitung von Rohresh zu einem nutzbaren Resh oder "Feinresh" ist die Zerkleinerung des als Brennstoff verwendbaren Reschanteils auf beispielsweise drei Millimeter. Diese Aufbereitung erlaubt es, den stark heterogenen Resh so zu homogenisieren, dass bei einer Verbrennung des behandelten Resh Schwankungen ausgeglichen sind, die mit dem Rohresh bei der Zünd- und Abbrandgeschwindigkeit sowie beim Heizwert auftreten würden. Dank der Zerkleinerung auf die Ziel-Partikelgrössen ist es erst möglich, den behandelten Resh beispielsweise in einem Hochtemperaturofen, insbesondere einem Schmelzzyklon zu verwenden.

Metallische Anteile (z.B. Eisen oder Aluminium) und schwer zerkleinerbare Störstoffe sowie "Übergrössen", die im Rohresh enthalten sind, werden im Lauf des erfindungsgemässen Verfahrens ausgeschieden und anderen Verwertern weitergegeben bzw. an die Schredderbetriebe zurückgegeben. Bei dem nicht aufbereitbaren Anteil (Störstoffe und Übergrössen) handelt sich um eine Menge von wenigen Gewichtsprozenten. Der behandelte Resh wird als Endprodukt in Silos gebunkert, aus denen dieses Material als Brennstoff dosiert einer Verbrennung zugeführt werden kann.

Es sind zusätzlich Mittel zur Entstaubung vorgesehen sowie Explosions-Schutzmassnahmen.

Nachfolgend wird die Erfindung anhand der Zeichnungen erläutert. Es zeigen:
- Fig. 1: ein Blockbild, mit dem das Verfahren bzw. die Anlage gemäss der Erfindung schematisch dargestellt ist,
- Fig. 2: einen Ausschnitt der Anlage, mit dem einzelne der vernetzten Systemkomponenten veranschaulicht sind und
- Fig. 3: einen zweiten Ausschnitt.

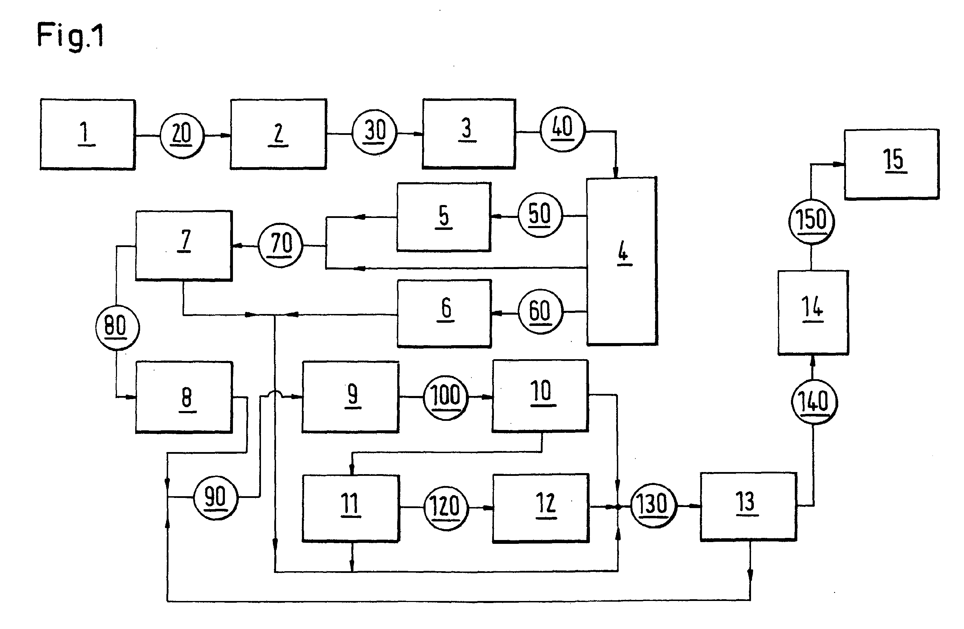

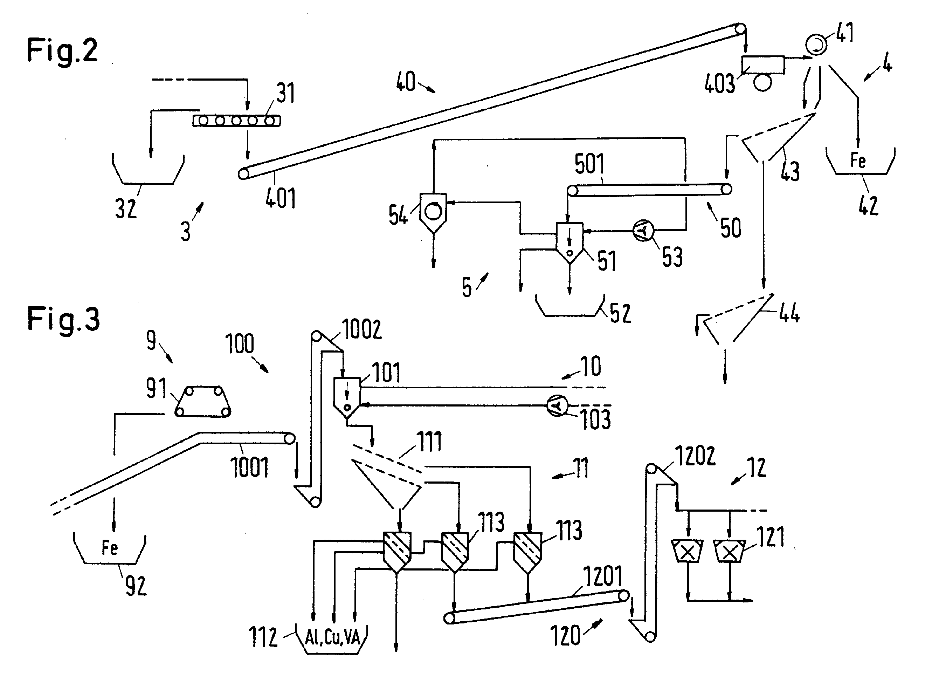

Beim erfindungsgemässen Verfahren wird das Einsatzgut in einem Durchlauf durch eine Anlage in diverse Ströme einerseits von schwer zerkleinerbaren Störstoffen und andererseits von metallischen sowie nichtmetallischen Fraktionen verzweigt. Diese Anlage ist ein netzwerkartiges System von Systemkomponenten: nämlich Transport-, Separierungs- sowie Klassierungsmittel und als Zerkleinerungsvorrichtungen verwendete Maschinen. Störstoffe mit Übergrössen werden bereits zu Beginn des Verfahrens eliminiert. Die weiteren Störstoffe werden bei deren Aufgreifen jeweils vor Eintritt in eine zu schützende Maschine oder eine andere verletzliche Systemkomponente aus dem Verfahren entfernt. Metalle werden als rezyklierbare Endprodukte ausgesondert. Nichtmetallische Fraktionen, die insbesondere aus drei Fraktionen - bestehend jeweils hauptsächlich aus Kunststoffpartikeln, faserigen Stoffen bzw. anorganischen Partikeln - gebildet sind, werden als Zwischenprodukte in Bezug auf weitere Teilverfahren, beispielsweise eine Verbrennung in einem kontinuierlich betreibbaren Brenner, gesondert behandelt. Im Blockbild der Fig. 1 sind die Transportmittel durch kreisförmige Blöcke 20, 30, 40, 50, 60, 70, 80, 90, 100 120, 130, 140 und 150 dargestellt. Die rechteckigen Blöcke stehen für einzelne Systemkomponenten oder Gruppen solcher Komponenten. Die Referenznummern für die Blöcke werden in den Figuren 2 und 3 für die entsprechenden Systemkomponenten verwendet.

Das erfindungsgemässe Verfahren wird anhand einer Behandlung von Resh als Einsatzgut beispielhaft und detaillierter beschrieben. Der Rohresh wird von einem Schredderbetrieb - Block 1 in Fig. 1 - angeliefert und in einem ersten Schritt - Block 20 - mit einem Greiferkran gut durchmischt. Dieses Einsatzgut des erfindungsgemässen Verfahrens wird in einen Aufgabebunker - Block 2 - gebracht, aus dem es den Systemkomponenten der erfindungsgemässen Anlage zum mechanischen Zerkleinern zugeführt wird. Der Austrag aus dem Aufgabebunker erfolgt mittels eines Schubbodens - Block 30 -, mit dem das Einsatzgut in Richtung einer Austragsöffnung geschoben wird. Da die Bestandteile des Rohresh zum Teil ineinander verhakt sind und daher Verklumpungen vorliegen, hat das Material die Tendenz, an der Austragsöffnung lawinenartig abzurutschen. Um den Transport - siehe im Nachfolgenden Fig. 2 - mit einem gleichmässigen Strom durchführen zu können, wird ein Rollenrost 31 - Block 3 - eingesetzt. Der Rollenrost 31, mit dem der Rohresch gelockert wird und dessen Rollen die gelockerten Reshbestandteile (Stückgrösse < 300 mm) in vertikaler Richtung passieren lassen, erlaubt die Eliminierung von übergrossen Stücken, die nur in horizontaler Richtung auf den Rollen transportiert werden und so einfach von einer Beschickung der weiteren Systemkomponenten fern gehalten werden können. Diese übergrossen Stücke werden in einer Mulde 32 zwischengelagert. Der Rollenrost 31 weist die Funktionen von Transport-, Separierungs- und Klassierungsmitteln auf.

Das Material, das den Rollenrost 31 passiert, wird - Block 4 - mit einem Förderband 401 zu einem Siebturm transportiert. Bei einer Förderrinne 403, die zu einem ersten Sieb 43 (ein zweites Klassierungsmittel) führt, hebt eine Magnettrommel 41 (ein zweites Separierungsmittel) lockere Eisenteile aus. Der Magnet ist dabei so stark eingestellt, dass er nur frei liegende Stücke aus magnetisierbarem Material aus dem Gemisch heraus hebt. Bei einem zu starken Magnetfeld würden auch wollige Füllstoffe und Textilien, die an magnetisierbaren Teilen wie Drähten und kleinen Blechstücken hängen bleiben, unerwünschterweise aus dem Resh entfernt. Die abgeschiedenen Eisenteile (Fe) gelangen in eine Mulde 42.

Das erste Sieb 43 trennt bei zirka 30 mm und hat eine reine Schutzfunktion. Es verhindert, dass zu schwere Teile mit scharfkantigen Oberflächen und Spitzen auf ein nachfolgendes Spannwellensieb 44 mit feineren Siebbelägen (Maschenweite 3 mm) gelangen. Die Siebbeladung des Spannwellensiebes 44 wird klein gehalten, um eine gute Aussiebung zu erhalten. Unter den Übergrössen des ersten Siebes können auch Störstoffe auftreten, nämlich Wellen, Kolben, Bolzen, Reifenteile oder ähnliche gröbere Stücke. Daher wird dieses ungünstige Material in einen Sichter - Block 5 - geleitet. Dieses weitere Separierungs- und Klassierungsmittel umfasst ein Gebläse 53 und Zyklone 51 und 54, mit denen die Störstoffe durch Trennung mit einem Luftstrom entfernbar sind. Die Zufuhr - Block 50 - in den Sichter 5 erfolgt über ein Förderband 501. Die Störstoffe werden in einer Mulde 52 gesammelt und schliesslich an die Schredderbetriebe (Block 1) zurückgegeben. Der Resh ist nach dem Sichter (Block 5) weitgehend frei von Störstoffen. Die nachfolgenden Zerkleinerungsvorrichtungen sind nun vor Beschädigung oder übermässigem Verschleiss weitgehend geschützt.

Das Unterkorn des ersten Siebes 43 (< 30 mm) wird auf dem nachfolgenden Spannwellensieb 44 bei 3 mm abgesiebt. Die Fraktion mit Grössen < 3 mm macht in der Regel einen Anteil von 25 - 40 Gew-% vom Rohresh aus. Sie hat einen grösseren Anteil an anorganischem Material als der übrige Resh. Sie kann noch Metalle enthalten, die Eisen- und Nichteisenmetallen umfassen und die im Block 6 mittels Magnettrommeln bzw. Nichteisenmetall-Scheidern (nicht dargestellt) entfernbar sind. Die so abgesonderten Metalle werden zu einer weiteren Verwertung in Mulden gesammelt. Der Rest der Fraktion gelangt über Förderbänder in einen Feinreshbunker (Block 14).

Das Einsatzgut, der Resh, enthält neben zerschlagbaren auch zähe, d.h. gegen Schlageinwirkungen resistente Komponenten. Der Resh wird und/oder einzelne Fraktionen werden kontinuierlich oder semikontinuierlich in Verfahrensstufen des netzartigen Systems mittels mindestens einer Zerkleinerungsvorrichtung - Block 7 - der Einwirkung von Schläge abgebenden Maschinenteilen ausgesetzt (keine Detaildarstellung). Eine derartige Vorrichtung ist aus der DE-A- 196 00 482 bekannt. Zähe Komponenten des Resh werden in nachfolgenden Zerkleinerungsstufen - Blöcke 8 und 12 - weiter behandelt, indem diese Komponenten mittels Scherbewegungen ausübenden Maschinenteilen in mindestens einer weiteren Vorrichtung zerkleinert werden. Dabei werden unter Verwendung von Klassierungsmitteln stückige, d.h. in Stücke desintegrierte Zwischenprodukte erzeugt, deren Stückgrössen hinsichtlich der vorgesehenen Nutzung des behandelten Resh jeweils Werte annehmen, die kleiner als vorgebbare Maximalwerte sind.

Bei der beschriebenen Ausführungsform des erfindungsgemässen Verfahrens werden die Fraktionen nach dem Sichter (Block 5) zusammengeführt und zur weiteren Behandlung auf Prallreaktoren (Zerkleinerungsvorrichtungen) - Block 7 - verteilt. Ein solcher Reaktor ist eine Maschine, die eine zylinderische Form hat und die oben und unten geschlossen ist. Ein Rotor des Prallreaktors ist mit Hämmern bestückt. Der Resh wird durch den drehenden Rotor mitgerissen. Eine Zerkleinerung erfolgt durch Prall- und Scherkräfte an den Hämmern, aber auch durch Wechselwirkung zwischen den Bestandteilen des Resh. Die sich im Resh befindlichen Kunststoff- und Metallteile tragen nämlich dank scharfen Kanten zur Zerkleinerung von Schaumstoffen, Textilien und anderen zähen Komponenten bei.

An der Peripherie des Reaktorgehäuses sind auf der Höhe des Rotors Siebflächen mit Spaltweiten von beispielsweise 3 mm oder für eine andere Endkorngrösse angeordnet, durch die zerkleinerte Reshbestandteile die Maschine seitlich verlassen können. Die elektrische Belastung der Maschine wird zur Regelung der Beschickung genutzt, in dem die Stromaufnahme als Steuergrösse verwendet wird. Wenn die Stromstärke, mit der die Maschine das elektrische Netz belastet, unter einen vorgegebenen Wert sinkt, wird gesteuert Resh nachgespeist. Ein Anteil, der hauptsächlich aus nicht zerkleinerbaren Komponenten besteht, beispielsweise Polymeren, wird intermittierend, jeweils nach Ablauf eines vorgebbaren Zeitintervalls, aus der Maschine ausgestossen. Diese Grobfraktion gelangt über Förderbänder und einen Elevator (Block 80, keine Detaildarstellung) auf ein weiteres Spannwellensieb (im Block 8), mit dem das noch bestehende Feinkorn bei 3 mm abgesiebt wird.

In einer weiteren Maschine - Block 8 - wird das Überkorn der genannten Grobfraktion auf eine Grösse < 20 mm zerkleinert. Diese Maschine arbeitet kontinuierlich nach dem Prinzip einer Schlagschere. Die auf einer rotierenden Welle montierten Messerblöcke bewegen sich in geringem Abstand an stehenden Messerblöcken vorbei. Das zwischen die Messerblöcke gelangende Material wird durch Abscherung in kleinere Teile zerschnitten. An der Unterseite der Rotorwelle ist ein Granuliersieb eingebaut. Die Lochgrösse bestimmt die Partikelgrösse und den Durchsatz.

In einer stromaufwärts angeordneten Zerkleinerungsstufe - Block 6 -sind Metalle zerkleinert und freigelegt worden. Die ferromagnetischen Metalle - siehe im Nachfolgenden Fig. 3 - werden mit einem Überbandmagneten 91 des Blocks 9 separiert und danach in Mulden 92 gelagert. Daraufhin wird das Resh-Material mit weiteren Zerkleinerungsmaschinen weiter auf 3 mm (oder andere Endkorngrösse) zerkleinert.

Vom Block 9 führt der Transport - Block 100 - über ein Förderband 1001 und einen Elevator 1002 zu einem weiteren Separationsmittel - Block 10 -, in welchem mittels eines Sichters (Zyklon 101, Gebläse 103) Flusen abgeschieden werden, die in nachfolgenden Trennschritten eine behindernde Wirkung ausüben würden. Auf einem Sieb 111 - Block 11 - wird das Einsatzgut in weitere Fraktionen getrennt. Auf Lufttrenntischen 113 (auch Block 11) werden freigelegte Metalle wie Aluminium, Kupfer, Chromstahl und ein Rest an Eisen von den Kunststoffpartikeln separiert und in einer Mulde 112 zwischengelagert.

Ein Überkorn, das zu gross für die Verwendung in einem Schmelzzyklon - Block 15 - ist, wird in Schneidmühlen 121 - Block 12 - weiter zerkleinert. Die Zufuhr - Block 120 - erfolgt auf einem Förderband 1201 und mit einem Elevator 1202. Mittels eines Transportmittels - Block 130 -, das sich über einen grösseren Teil der Anlage erstreckt, werden Zwischenprodukte aus den Systemkomponenten der Blöcke 6, 7, 10, 11 und 12 vereinigt und einem Kontrollsieb - Block 13 - zugeführt. Ein Überkorn wird - Block 90 - in den Block 9 zurück transportiert. Alle zerkleinerten und gesiebten Fraktionen mit Partikelgrössen < 3 mm werden als homogenisierte Mischung in Silos gefördert: Blöcke 140 und 14. Dieser Feinresh wird der Nutzung durch mindestens ein weiteres Verfahren zugeführt, z. B. der Verglasung von Schlacke: Blöcke 150 und 15.

Am Rohreshbunker (Block 2) ist eine separate Entstaubungseinrichtung vorgesehen. Mit dieser werden Staubwolken, die bei einer Entladung eines Containers entstehen, abgesaugt. So wird eine Verfrachtung von Staub durch offene Bunkertore in die Umgebung vermieden. Die Entstaubung wird in der mechanische Aufbereitung bevorzugt trocken durchgeführt. Das ist bei allen Transportvorgängen in bzw. zwischen den Systemkomponenten möglich.

Die Prallreaktoren werden wegen den erzeugten Luftströmungen separat und nass entstaubt; denn es herrscht Explosionsgefahr. Ein aus dem Staub in Wäschern entstehende Schlamm wird teilweise entwässert und in den Rohreshbunker gekippt. Die Feinreshsilos werden an den gleichen Filtereinrichtungen wie die mechanischen Systemkomponenten trocken entstaubt. Ein abgereinigter Filterstaub wird vor der Verteilung des Feinreshs in eines der Silos dem Feinresh wieder zugegeben.

Der behandelte Resh und im besonderen Mass Zyklon- und Filterstäube können in Luft und mit einer starken Zündquelle zündfähig sein. Von einer Brand- oder Explosionsgefahr betroffen sind ein Teil der Zerkleinerungsmaschinen, die Entstaubungsanlagen und die Feinreshlagerung. Die von Explosionen bedrohten Zerkleinerungsmaschinen werden jeweils mit vertikalem Druckentlastungsrohr und Berstscheibe ausgerüstet. Die Entstaubung der Maschinen wird nass und unter Verwendung von Wäschern durchgeführt. Die trockene Entstaubungsanlage der übrigen Anlageteile wird mit Expansionsklappen und Berstscheiben ausgestattet. Zum Schutz gegen mögliche Explosionen und Brände sind die Silos oben geschlossen ausgeführt. So würde in einem Ernstfall eine Brandausdehnung zwischen Silos verhindert. Jedes Silo ist mit einem Druckentlastungsrohr und Entlastungsklappen ausgestattet. Das Druckentlastungsrohr wird über Dach geführt.

Nachfolgend werden weitere oder bereits erwähnte Merkmale von besonderen Ausführungsformen des erfindungsgemässen Verfahrens zusammengestellt:

Kleinstückiges Material, sogenanntes Feinmaterial, das bereits bei einem ersten Zerkleinerungsschritt, insbesondere bei einem Schreddern anfällt, wird vor einem weiteren Zerkleinerungsschritt einer stromabwärts nachfolgenden Fraktion zugeführt. Das Feinmaterial kann auch als Teil eines Endprodukts aus dem Verfahren abgezogen werden.

Eine Zerkleinerungsvorrichtung (z. B. der Prallreaktor) wird in mindestens einer Verfahrensstufe semikontinuierlich betrieben, indem das Einsatzgut oder eine Fraktion kontinuierlich oder quasikontinuierlich (in regelmässig zudosierten Portionen) eingespiesen wird. Mit einem Klassierungsmittel wird laufend kleinstückiges Material als ein Zwischenprodukt aus der Zerkleinerungsvorrichtung abgezogen. Das Einsatzgut bzw. die Fraktion wird zu einer optimalen Auslastung des Apparats dauernd nachgespiesen. Grobstückiges, d.h. ungenügend zerkleinertes Material, wird intermittierend, insbesondere periodisch mit einer Auswurfeinrichtung aus der Zerkleinerungsvorrichtung ausgestossen. Das grobstückige Material wird einer weiteren Zerkleinerungsstufe zugeführt. Das Zwischenprodukt wird, gegebenenfalls nach einer Weiterbehandlung, gesamthaft oder teilweise als ein Endprodukt für die weitere Nutzung bereit gestellt.

Die Ströme der nichtmetallischen Fraktionen werden bereits innerhalb oder am Ausgang des netzwerkartigen Systems zu einem Endprodukt zusammengeführt; dabei wird vorzugsweise eine homogenisierte Mischung erzeugt. Dieses Endprodukt ist gut als Brennstoff bei einer Verglasung von Aschen aus Kehrrichtverbrennungs-Anlagen geeignet. Die nichtbrennbare nichtmetallische Fraktion, die mit verglast wird, muss dabei jedoch so stark zerkleinert sein, insbesondere unter Verwendung von Kugelmühlen oder von zu einer Sanderzeugung entwickelten Mühlen, dass die Partikel dieser Fraktion in einer Brennkammer zumindest teilweise aufschmelzbar sind. Die Brennkammer ist beispielsweise der bereits genannte Schmelzzyklon. Das Schmelzen muss während des Flugs durch eine Flammzone eintreten, bevor die Partikel auf eine innere Oberfläche der Brennkammer aufschlagen.

Bei der Behandlung von Resh werden drei nichtmetallische Fraktionen ausgebildet, nämlich Fraktionen bestehend jeweils hauptsächlich aus Kunststoffpartikeln, faserigen Stoffen bzw. anorganischen Partikeln. Unter Verwendung von Klassierungsmitteln werden stückige Zwischenprodukte erzeugt, deren Stück- oder Partikelgrössen kleiner als 3 mm sind. Die Partikelgrösse der anorganischen Fraktion ist vorzugsweise noch kleiner, insbesondere kleiner als 2 mm, wenn alle drei nichtmetallischen Fraktionen gesamthaft zur Verwendung als Brennstoff vorgesehen sind (wobei allerdings die anorganischen Fraktion lediglich einen Ballastanteil bildet).

## Patentansprüche

1. Verfahren zum mechanischen Zerkleinern und Nutzen eines heterogenen Einsatzguts, das Metalle und verbrennbare sowie nichtbrennbare nichtmetallische Komponenten umfasst, wobei das Einsatzgut als Reststoffprodukt bei einem Recyclingverfahren, insbesondere bei einem Schreddern von Autowracks anfallen kann, bei welchem Verfahren das Einsatzgut in einem Durchlauf durch ein netzwerkartiges System von Systemkomponenten, nämlich Transport-, Separierungs- sowie Klassierungsmitteln und als Zerkleinerungsvorrichtungen verwendeten Maschinen, in diverse Ströme von metallischen sowie nichtmetallischen Fraktionen und von schwer zerkleinerbaren Störstoffen verzweigt wird, Störstoffe mit Übergrössen bereits zu Beginn des Verfahrens eliminiert werden und die weiteren Störstoffe jeweils bei deren Aufgreifen vor Eintritt in eine zu schützende Systemkomponente, insbesondere Maschine, aus dem Verfahren entfernt werden, die Metalle als rezyklierbare Endprodukte ausgesondert werden, die nichtmetallischen Fraktionen, die insbesondere aus drei Fraktionen - bestehend jeweils hauptsächlich aus Kunststoffpartikeln, faserigen Stoffen bzw. anorganischen Partikeln - gebildet sind, als Zwischenprodukte in Bezug auf weitere Teilverfahren, beispielsweise eine Verbrennung in einem kontinuierlich betreibbaren Ofen, gesondert behandelt werden und die behandelten Zwischenprodukte in mindestens einem weiteren Teilverfahren genutzt werden.

2. Verfahren nach Anspruch 1, **dadurch gekennzeichnet, dass** das aus einem heterogenen Gemisch bestehende Einsatzgut Fasern, Schaumstoffe, Kunststoffe, Holz, Papier, Drähte, elektrische Kabel, weitere Metalle und/oder weitere anorganische Stoffe umfasst und das neben zerschlagbaren auch zähe, d.h. gegen Schlageinwirkungen resistente Komponenten enthält, dass das Einsatzgut und/oder einzelne Fraktionen kontinuierlich oder semikontinuierlich in Verfahrensstufen mittels mindestens einer Zerkleinerungsvorrichtung der Einwirkung von Schläge abgebenden Maschinenteilen ausgesetzt werden, während zähe Komponenten in mindestens einer nachfolgenden Zerkleinerungsstufe weiter behandelt werden, indem diese Komponenten mittels Scherbewegungen ausübenden Maschinenteilen in mindestens einer weiteren Vorrichtung zerkleinert werden, wobei unter Verwendung von Klassierungsmitteln stückige, d.h. in Stücke desintegrierte Zwischenprodukte erzeugt werden, deren Stückgrössen hinsichtlich des Einsatzes in den weiteren Teilverfahren jeweils Werte annehmen, die kleiner als vorgegebene Maximalwerte sind, und ein solches Teilverfahren beispielsweise ein Verfahren zu einer thermischen oder biologischen Weiterverwertung von mindestens einer der Fraktionen ist.

3. Verfahren nach Anspruch 1 oder 2, **dadurch gekennzeichnet, dass** kleinstückiges Material, sogenanntes Feinmaterial, das bereits bei einem ersten Zerkleinerungsschritt, insbesondere bei einem Schreddern anfällt, vor einem weiteren Zerkleinerungsschritt einer stromabwärts nachfolgenden Fraktion zugeführt oder als Teil eines Endprodukts aus dem Verfahren abgezogen wird.

4. Verfahren nach einem der Ansprüche 1 bis 3, **dadurch gekennzeichnet, dass** eine Zerkleinerungsvorrichtung in mindestens einer Verfahrensstufe semikontinuierlich betrieben wird, indem das Einsatzgut oder eine Fraktion kontinuierlich oder quasikontinuierlich eingespiesen wird, dass mit einem Klassierungsmittel laufend kleinstückiges Material als ein Zwischenprodukt aus der Zerkleinerungsvorrichtung abgezogen wird, dass das Einsatzgut bzw. die Fraktion zu einer optimalen Auslastung des Apparats dauernd nachgespiesen wird und grobstückiges, d.h. ungenügend zerkleinertes Material intermittierend mit einer Auswurfeinrichtung aus der Zerkleinerungsvorrichtung ausgestossen wird, dass das grobstückige Material einer weiteren Zerkleinerungsstufe zugeführt wird und dass das Zwischenprodukt, gegebenenfalls nach einer Weiterbehandlung, gesamthaft oder teilweise als ein Endprodukt für die weitere Nutzung bereit gestellt wird.

5. Verfahren nach einem der Ansprüche 1 bis 4, **dadurch gekennzeichnet, dass** die Ströme der nichtmetallischen Fraktionen bereits innerhalb oder am Ausgang des netzwerkartigen Systems zu einem Endprodukt zusammengeführt werden und dabei vorzugsweise eine homogenisierte Mischung erzeugt wird, und dass dieses Endprodukt als Brennstoff bei einer Verglasung von Schlacken aus Kehrrichtverbrennungs-Anlagen verwendet wird, wobei die nichtbrennbare nichtmetallische Fraktion so stark verkleinert ist, insbesondere unter Verwendung von Kugelmühlen oder von zur Sanderzeugung entwickelten Mühlen, dass die Partikel dieser Fraktion in einer zur Verglasung verwendeten Brennkammer, insbesondere einem Schmelzzyklon.

6. Verfahren nach Anspruch 5, **dadurch gekennzeichnet, dass** drei nichtmetallische Fraktionen ausgebildet werden, nämlich bestehend jeweils hauptsächlich aus Kunststoffpartikeln, faserigen Stoffen bzw. anorganischen Partikeln, und dass unter Verwendung von Klassierungsmitteln stückige Zwischenprodukte erzeugt werden, deren Stück- oder Partikelgrössen kleiner als 3 mm sind und die Partikelgrösse der anorganischen Fraktion vorzugsweise noch kleiner, insbesondere kleiner als 2 mm ist, wenn die nichtmetallischen Fraktionen gesamthaft zur Verwendung als Brennstoff vorgesehen sind.

7. Anlage zum Durchführen des Verfahrens gemäss einem der Ansprüche 1 bis 6, **gekennzeichnet durch** folgende Systemkomponenten:
Klassierungs- und Separierungsmittel zum Bilden von Fraktionen oder Eliminieren von Störstoffen; Transportmittel zum kontinuierlichen bzw. chargenweisen Fördern von nichtmetallischen Fraktionen bzw. Metallen und Störstoffen, die in Sammelbehältern zwischengelagert werden; und mindestens zwei Zerkleinerungsvorrichtungen zum Zerschlagen bzw. Zerschneiden von Komponenten des Einsatzguts, wobei Prallreaktoren, Maschine mit Schlagscheren und Schneidmühlen zu partiellen Fragmentierungen verwendet werden können.

8. Anlage nach Anspruch 7, **dadurch gekennzeichnet, dass** im Zusammenspiel der Klassierungsmittel die erforderlichen Stückgrössen kleiner als die genannten Maximalwerte erzeugbar sind, dass die Klassierungsmittel zumindest teilweise Einrichtungen sind, die mit Sieben, Spannwellensieben, Siebstegen, Lochblechen oder ähnlichem solcherart ausgestattet sind, dass durch Verändern der Klassierungsmittel ein nachträgliches Anpassen des Verfahrens möglich ist, wobei diese Einrichtungen beispielsweise in einem Siebturm angeordnet sein können, und dass als Separierungsmittel Rollenroste, Sichter, Lufttrenntische, Magnettrommeln, Überbandmagnete und/oder Nichteisenmetall-Scheider zum Einsatz kommen, wobei diese Systemkomponenten jeweils auch als eine einzelne Komponente auftreten können.

9. Anlage nach Anspruch 7 oder 8, **dadurch gekennzeichnet, dass** als Transportmittel Greiferkranen, Rollenroste, Förderbänder und/oder Elevatoren zum Einsatz kommen, wobei diese Systemkomponenten auch jeweils als eine einzelne Komponente auftreten können, und dass Behälter wie Mulden, Bunker und/oder Silos zu Lagerungszwecken die Transportmittel ergänzen.

10. Anlage nach Anspruch 7 oder 8, **dadurch gekennzeichnet, dass** zusätzlich Mittel zur Entstaubung und Explosions-Schutzmassnahmen vorgesehen sind.
